# EUROPEAN PATENT APPLICATION

(11) **EP 2 197 246 A2**
(43) Date of publication of application: **16.06.2010**
(21) Application number: 09014952.7
(22) Date of filing: 02.12.2009
(51) Int. Cl.: H05B 33/08, H05B 41/298

(54) **Lighting device and illumination fixture using the same**

(30) Priority: 12.12.2008 JP 2008317730
(71) Applicant: Panasonic Electric Works Co., Ltd., Kadoma-shi Osaka 571-8686 (JP)
(72) Inventor: Maehara, Minoru, Osaka (JP); Hiramatu, Akinori, Nara (JP); Kobayashi, Masaki, Osaka (JP)
(74) Representative: Rüger, Barthelt & Abel Patentanwälte

(57) **Abstract**

[Object] To make it possible to light a fluorescent LED lamp in an illumination fixture using an inverter lighting device.

[Means for Settlement] A lighting device includes a function of detecting that a fluorescent LED lamp is attached to the lighting device by applying an output voltage lower than a rated voltage of a fluorescent lamp 7 to between lamp output terminals a and c in a predetermined period after the lighting device is lighted on, a voltage suited for the fluorescent LED lamp is outputted upon detecting that the fluorescent LED lamp is attached to the lighting device, and the lighting device performs operation of preheating, starting, and lighting suited for the fluorescent lamp 7 upon not detecting that the fluorescent LED lamp is attached to the lighting device in the predetermined period after the lighting device is lighted on.

## Description

### [Field of the Invention]

The present invention relates to a lighting device lighting a fluorescent lamp or a fluorescent LED lamp and a illumination fixture using the same.

### [Background Art]

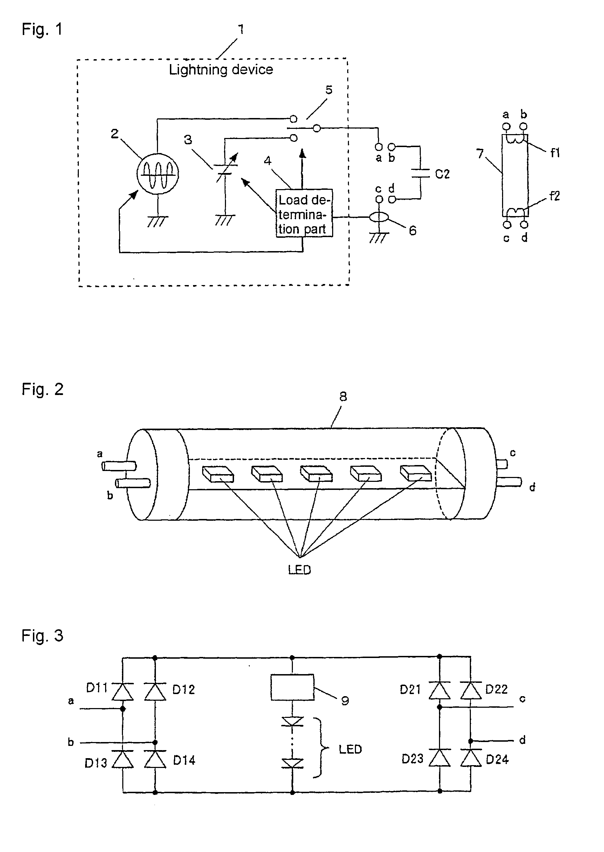

Conventionally, various manufactures have put fluorescent LED lamps on practical use. Fig. 2 shows a bird's-eye view of a fluorescent LED lamp. Fig. 3 is an equivalent circuit diagram. The fluorescent LED lamp is configured so that a plurality of LEDs mounted on a substrate is connected between lamp electrodes. The fluorescent LED lamp is on the market as one for realizing power saving with a long life by attaching not a fluorescent lamp but the fluorescent LED lamp to a conventional fluorescent illumination fixture. However, the fluorescent illumination fixture to which the fluorescent LED lamp is attached is conventionally often incompatible with an inverter illumination fixture.

Patent Document 1 (Japanese Unexamined Patent Publication No. 2003-168580) discloses a lighting device intended at cost reduction by sharing a high frequency lighting circuit among fluorescent lamps of different types. With a technique of the Patent Document, a lamp current of each fluorescent lamp is detected, a type of each fluorescent lamp is discriminated according to a difference in the lamp current, and power supplied to each fluorescent lamp is controlled based on a discrimination result. However, the technique is not intended to discriminate difference between the fluorescent lamp and the fluorescent LED lamp.
[Patent Document 1] Japanese Unexamined Patent Publication No. 2003-168580

### [Disclosure of the Invention]

### [Problems to be solved by the Invention]

In relation to a conventional technique, incompatibility of the inverter illumination fixture with the fluorescent LED lamp is considered to result from a fact that a higher voltage than a rated lighting voltage is outputted to between lamp output terminals at the time of starting each fluorescent lamp and an excessive voltage is outputted to each fluorescent LED lamp to destroy each in the inverter illumination fixture.

The present invention has been made in light of these respects. It is an object of the present invention to make it possible to light a fluorescent LED lamp in an illumination fixture using an inverter lighting device.

### [Means adapted to solve the Problems]

According to a first aspect of the present invention, there is provided a lighting device for lighting a fluorescent lamp with a high frequency, including a function of detecting that a fluorescent LED lamp is attached to the lighting device, wherein a voltage suited for the fluorescent LED lamp is outputted if the function detects that the fluorescent LED lamp is attached to the lighting device.

According to a second aspect of the present invention based on the first aspect, the lighting device includes a function of detecting that the fluorescent LED lamp is attached to the lighting device by applying an output voltage lower than a rated voltage of the fluorescent lamp to between lamp output terminals in a predetermined period after the lighting device is lighted on, wherein in the case where the function does not detect that the fluorescent LED lamp is attached to the lighting device in the predetermined period, the lighting device performs operations of preheating, starting and lighting suited for the fluorescent lamp.

According to a third aspect of the present invention based on the second aspect, an output voltage applied to between the lamp output terminals in the predetermined period after the lighting device is lighted on is a direct-current voltage, and the function detects that the fluorescent LED lamp is attached to the lighting device by detecting that a current is applied to between the lamp output terminals as a result of application of the DC voltage.

According to a fourth aspect of the present invention based on the second aspect, the output voltage applied to between the lamp output terminals in the predetermined period after the lighting device is lighted on is a high-frequency voltage, and the function detects that the fluorescent LED lamp is attached to the lighting device by detecting that a current equal to or higher than a predetermined current is applied to between the lamp output terminals as a result of application of the high-frequency voltage.

According to a fifth aspect of the present invention, there is provided an illumination fixture including the lighting device according to any one of the first to fourth aspects of the present invention.

### [Effect of the Invention]

According to the present invention, the lighting device includes the function of detecting the fluorescent LED lamp and outputs the voltage suited for the fluorescent LED lamp if the function detects the fluorescent LED lamp, whereby it is possible to light not only the fluorescent lamp but also the fluorescent LED lamp in the fluorescent illumination fixture using the inverter lighting device.

### [Best Mode for Carrying Out the Invention]

### (First embodiment)

Fig. 1 is a block diagram showing a schematic configuration of a first embodiment of the present invention. A lighting device 1 includes a high-frequency power source part 2, a direct-current (DC) power source part 3, and a load determination part 4. The high-frequency power source part 2 functions to output a high-frequency voltage to between lamp output terminals a and c. The DC power source part 3 functions to output a DC voltage to between the lamp output terminals a and c. Switching means 5 selects one of the high-frequency power source part 2 and the DC power source part 3 according to a determination result of a load determination part 4. The load determination part 4 functions to activate/deactivate the high-frequency power source part 2 and the DC power source part 3 and to adjust an output of the high-frequency power source part 2 and the DC power source part 3. In a predetermined period (detection period) after the lighting device 1 is lighted on, the load determination part 4 selects not the high-frequency power source part 2 but the DC power source part 3, and outputs a low DC voltage to between the lamp output terminals a and c. At this time, current detection means 6 functions to determine whether a load connected to between the lamp output terminals a and c is a fluorescent lamp 7 (see Fig. 1) or a fluorescent LED lamp 8 (see Figs. 2 and 3) by determining whether or not a current is applied to between the lamp output terminals a and c.

The fluorescent lamp 7 includes filaments f1 and f2 on both ends of a discharge tube, respectively. One filament f1 is connected to between lamp output terminals a and b whereas the other filament f2 is connected to between lamp output terminals c and d.

The fluorescent LED lamp 8 is configured to accommodate therein a plurality of LEDs generally identical in shape to the fluorescent lamp 7 and a lighting circuit 9. A serial circuit of the lighting circuit 9 and the LEDs is connected to the lamp output terminals a to d via a bridge circuit including diodes D11 to D14 and a bridge circuit including diodes D21 to D24. The lighting circuit 9 may be a current-limiting resistor.

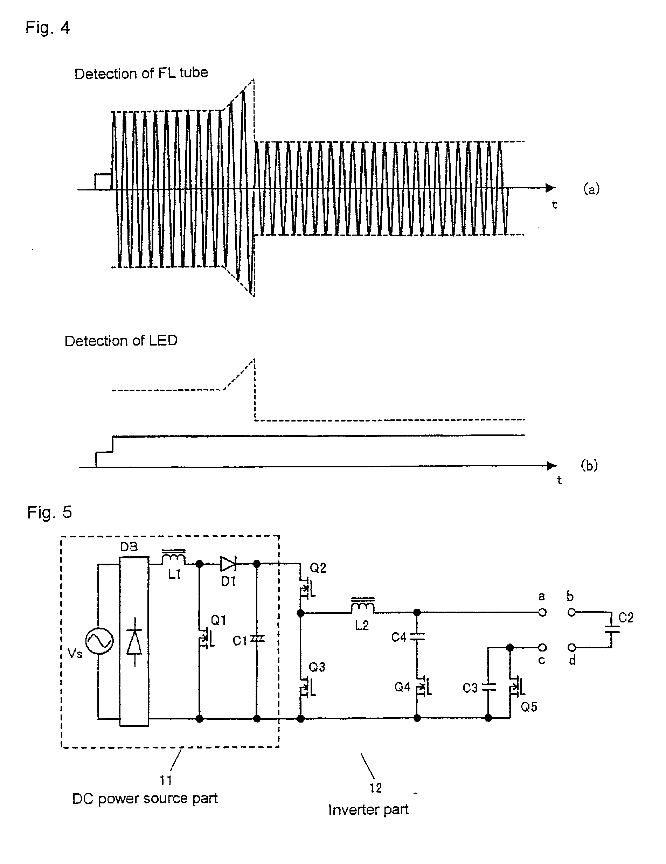

Fig. 4 shows lighting waveforms when the fluorescent lamp 7 and the fluorescent LED lamp 8 are attached to the lighting device 1, respectively. Fig. 4(a) shows an instance in which the fluorescent lamp 7 is attached to the lighting device 1 and Fig. 4(b) shows an instance in which the fluorescent LED lamp 8 is attached thereto. In Fig. 4(b), a broken line indicates an envelope of a high-frequency voltage of Fig. 4(a). It is understood that a high-frequency voltage is not applied to the fluorescent LED lamp 8 if the fluorescent LED lamp 8 is attached to the lighting device 1 differently from the instance in which the fluorescent lamp 7 is attached to the lighting device 1.

In the present embodiment, in the predetermined period (detection period) after the lighting device 1 is turned on, a DC voltage lower than a rated voltage of the fluorescent lamp 7 is outputted to between the lamp output terminals a and c, in which period, a type of the lamp is determined. An equivalent circuit to the fluorescent LED lamp 8 is that as shown in Fig. 3. Therefore, even the lower DC voltage than the rated voltage of the fluorescent lamp 7 is applied to between the lamp output terminals a and c, a current is applied thereto. If detecting this current, the current detection means 6 determines that the fluorescent LED lamp 8 is attached to the lighting device 1. Thereafter, a DC voltage higher than that applied in the predetermined period after the lighting device 1 is lighted on is outputted to between the lamp output terminals a and c, thereby lighting the fluorescent LED lamp 8 with a sufficient output.

On the other hand, in the case where the fluorescent lamp 7 is connected to the lamp output terminals a to d, a current is not applied even when the DC voltage lower than the rated voltage is outputted. Therefore, the load determination part 4 can detect the type of the lamp depending on whether or not a current is applied when the DC voltage is outputted.

In the case where the load determination part 4 does not detect the current applied to between the lamp output terminals a and c in the predetermined period after the lighting device 1 is lighted on, then the load determination part 4 determines that the fluorescent lamp 7 is attached to the lighting device 1, the switching means 5 selects the high-frequency power source 2, and the lighting device 1 operates in a sequence of preheating, starting and lighting necessary to light the fluorescent lamp 7. Specifically, the lighting device 1 is controlled to apply an enough preheat current to the filaments f1 and f2 of the fluorescent lamp 7 while keeping a voltage applied to between the both ends of the fluorescent lamp 7 lower than a starting voltage in a preheating period, to apply a voltage higher than the starting voltage to between the both ends of the fluorescent lamp 7 in a starting period, and to apply the rated voltage of the fluorescent lamp 7 to between the both ends of the fluorescent lamp 7 in a lighting period.

### (Second embodiment)

Fig. 5 is a circuit diagram of a second embodiment of the present invention. The second embodiment is a specific example of a circuit realizing the operation in the first embodiment. A lighting device shown in Fig. 5 includes a DC power source part 11 and an inverter part 12. The DC power source part 11 is configured to include a rectifier DB rectifying full waves of an alternating-current (AC) power source Vs, a set-up chopper circuit that includes an inductor L1 connected to an output of this rectifier DB, a switching element Q1 and a diode D1, and an electrolytic capacitor C1 smoothing an output from the set-up chopper circuit. The DC power source part 11 supplies a DC voltage to the inverter part 12. The inverter part 12 is configured to include a serial circuit of switching elements Q2 and Q3 that constitute a half-bridge inverter, and a load circuit is connected to both ends of the switching element Q3.

Reference symbols a, b, c, and d denote lamp output terminals, and a lighting voltage to be applied to a lamp is outputted to between the lamp output terminals a and c. A capacitor C2 is a resonance capacitor if a fluorescent lamp 7 is connected, and the capacitor C2 and an inductor L2 constitute a DC-cutting capacitor. A capacitor C3 is a DC-cutting capacitor. The capacitor C3 operates as the DC-cutting capacitor if the fluorescent lamp 7 is connected. A switching element Q5 serially connected to the capacitor C3 is turned off, whereby the capacitor C3 acts as the DC-cutting capacitor.

A capacitor C4 is a smoothing capacitor. The capacitor C4 operates as a smoothing capacitor if the fluorescent LED lamp 8 is connected to the lamp output terminals. A switching element Q4 serially connected to the capacitor C4 is turned on, whereby the capacitor C4 as well as the inductor L2 is connected to both ends of the switching element Q3 and the capacitor C4 is used as an output capacitor if each LED of the fluorescent lamp 8 is lighted by an output from a set-down chopper. In this case, at the same time, the switching element Q5 is turned on to short the DC-cutting capacitor C3, thereby invalidating the DC-cutting capacitor C3.

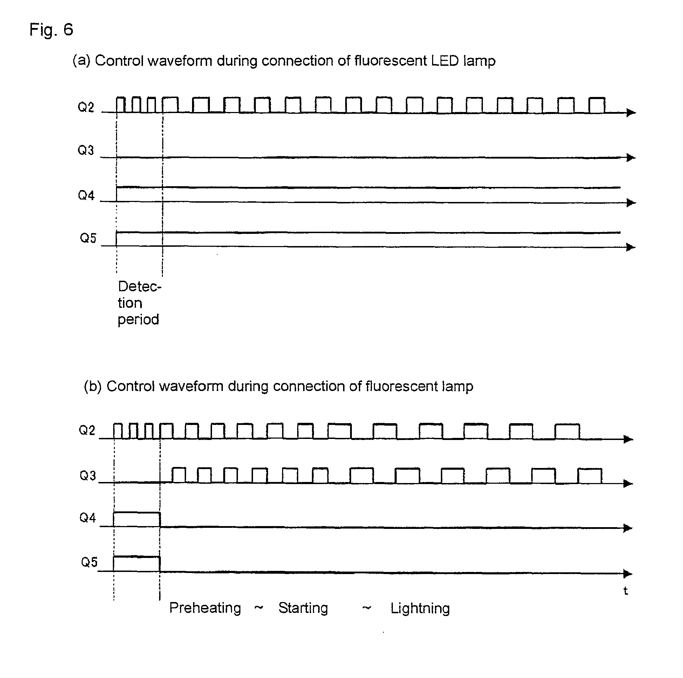

Fig. 6 shows operation waveforms according to the present embodiment. Fig. 6(a) shows control signal waveforms of the switching elements Q2, Q3, Q4, and Q5 if the fluorescent LED lamp 8 is connected. Fig. 6(b) shows control signal waveforms of the switching elements Q2, Q3, Q4, and Q5 if the fluorescent lamp 7 is connected.

Referring to Fig. 6(a), an operation if the fluorescent LED lamp 8 is connected will be described. In a predetermined period (detection period) after the lighting device is lighted on, the switching elements Q4 and Q5 are turned on, the switching element Q3 is turned off, and the switching element Q2 is caused to perform an ON or OFF operation, whereby the lighting device is caused to operate as a set-up chopper. When the switching element Q2 is turned on, a current flows in a route of the capacitor C1 → the switching element Q2 → the inductor L2 → the lamp (terminals a → c) → the switching element Q5 → the capacitor C1. In addition, a current flows in a route of the capacitor C1 → the switching element Q2 → the inductor L2 → the capacitor C4 → the switching element Q4 → the capacitor C1. Using the capacitor C1 as a power source, a current is applied to the lamp and the capacitor C4 while accumulating energy in the inductor L2.

When the switching element Q2 is turned off, a regenerative current flows in a route of the inductor L2 → the lamp (terminals a → c) → the switching element Q5 → the diode included in switching element Q3 → the inductor L2. In addition, a regenerative current flows in a route of the inductor L2 → the capacitor C4 → the switching element Q4 → the diode included in switching element Q3 → the inductor L2. The energy accumulated in the inductor L2 is emitted to the lamp and the capacitor C4.

If it is detected that a current is applied to the lamp during the detection period, it is determined that the fluorescent LED lamp 8 is connected to between the lamp output terminals a and c. Further, frequencies for turning on and off the switching element Q2 are controlled to be appropriately lower so as to output a DC voltage suited for the fluorescent LED lamp 8. Although current detection means is not shown, it suffices to insert a current detection resistor somewhere in the route of flow of a lamp current. For example, the current detection resistor may detect a voltage drop due to a resistance between a drain and a source of the switching element Q5.

Referring to Fig. 6(b), an operation if the fluorescent lamp 7 is connected will be described. ON and OFF states of the switching elements Q2 to Q5 in the predetermined period (detection period) after the lighting device is lighted on are similar to those shown in Fig. 6(a).

However, if the fluorescent lamp 7 is connected, then the fluorescent lamp 7 is not lighted by an output voltage from the set-down chopper, and a current is not eventually applied to between the lamp output terminals (a→c). If it is detected that the current does not flow in the predetermined period (detection period) after the lighting device is lighted on, then it is determined that the lamp is not the fluorescent LED lamp 8, and the lighting device performs an operation for lighting the fluorescent lamp 7.

Specifically, both the switching elements Q4 and Q5 are turned off, and the capacitor C4 of the set-down chopper is separated from the circuit, thereby turning the DC-cutting capacitor C3 into a state of being connected in series to the lamp output terminals. Further, an operation for turning on or off the switching element Q3 complementarily with the switching element Q2 starts, thereby outputting a high-frequency output voltage to between the lamp output terminals a and c. Switching frequencies of the switching elements Q2 and Q3 are appropriately reduced in each of preheating, starting and lighting periods, and an appropriate high-frequency voltage is outputted to between the lamp output terminals a and c, thereby making it possible to eventually light the fluorescent lamp 7.

According to the present embodiment, the period for turning on or off only one of the switching elements Q2 and Q3 constituting the half-bridge inverter is set, thereby causing the lighting device to operate as the set-down chopper to be able to output the DC voltage to between the lamp output terminals a and c. Therefore, the switching element Q2 and the inductor L2 of the inverter can be also used as constituent elements of the set-down chopper, making cost reduction possible.

### (Third embodiment)

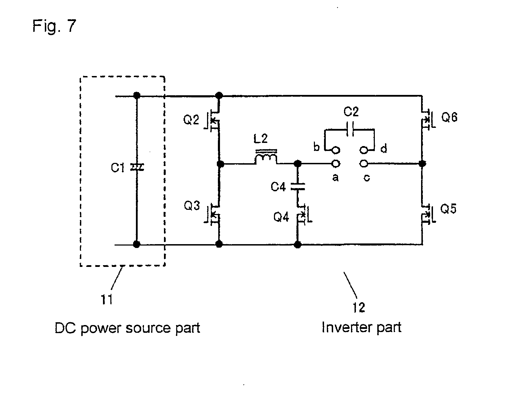

Fig. 7 is a circuit diagram according to a third embodiment of the present invention. The third embodiment is another specific example of a circuit realizing the operation in the first embodiment. A lighting device shown in Fig. 7 includes a DC power source part 11 and an inverter part 12. The DC power source part 11 is configured similarly to that shown in Fig. 5 and supplies a DC voltage to the inverter part 12. The inverter part 12 is a full-bridge inverter configured to connect a serial circuit of switching elements Q2 and Q3 to a serial circuit of switching elements Q6 and Q5 in parallel. A serial circuit of a capacitor C4 and a switching element Q4 is connected to both ends of the switching element Q3 via the inductor L2. By turning on the switching element Q4, the capacitor C4 can operate as an output capacitor of a set-up chopper.

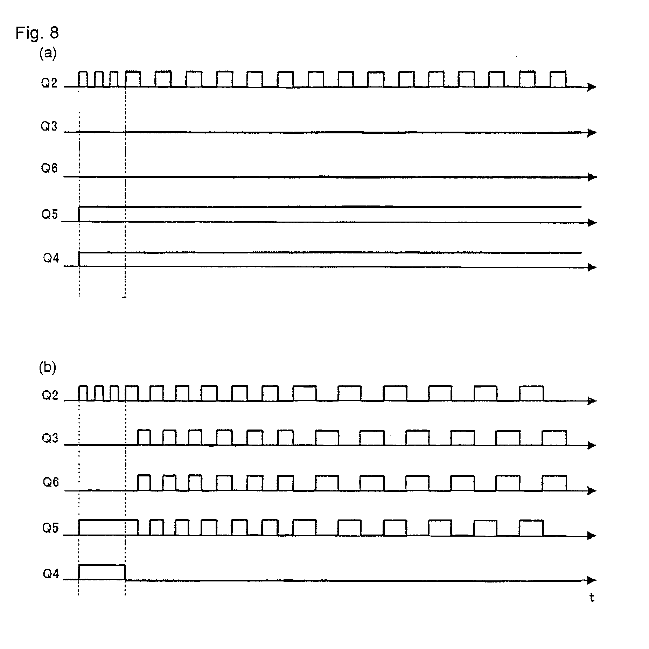

Fig. 8 shows operation waveforms according to the present embodiment. Fig. 8(a) shows control signal waveforms of the switching elements Q2, Q3, Q4, Q5, and Q6 if a fluorescent LED lamp 8 is connected. Fig. 8(b) shows control signal waveforms of the switching elements Q2, Q3, Q4, Q5, and Q6 if the fluorescent lamp 7 is connected.

Referring to Fig. 8(a), an operation if the fluorescent LED lamp 8 is connected will be described. In a predetermined period (detection period) after the lighting device is lighted on, the switching elements Q5 and Q4 are turned on, the switching elements Q3 and Q6 are turned off, and the switching element Q2 is caused to perform an ON and OFF operation. A constant voltage is applied to the capacitor C4 and the lamp (a→c) by an output voltage from a set-down chopper, and a current is applied to the fluorescent LED lamp 8. It is detected that the current is applied to the fluorescent LED lamp 8 in a predetermined period (detection period) after the lighting device is turned on. It is thereby determined that the fluorescent LED lamp 8 is connected. Further, frequencies for turning on and off the switching element Q2 are controlled to be appropriately lower so as to output a voltage suited for the fluorescent LED lamp 8 after end of the detection period.

Referring to Fig. 8(b), an operation if the fluorescent lamp 7 is connected will be described. ON and OFF states of the switching elements Q2 to Q6 in the predetermined period (detection period) after the lighting device is lighted on are similar to those shown in Fig. 8 (a). However, if the fluorescent lamp 7 is connected, then the fluorescent lamp 7 is not lighted by the output voltage from the set-down chopper, and a current is not eventually applied to between lamp output terminals (a → c). If it is detected that the current does not flow in the predetermined period (detection period) after the lighting device is lighted on, then it is determined that the lamp is not the fluorescent LED lamp 8, and the lighting device performs an operation for lighting the fluorescent lamp 7.

According to the present embodiment, the switching elements Q2 and Q5 are turned on or off synchronously, and the switching elements Q3 and Q6 are turned on or off synchronously in a phase inverted from that of the switching element Q2, whereby the lighting device operates as the full-bridge inverter. At this time, the switching element Q4 is turned off, thereby separating the capacitor C4 from a load circuit.

### (Fourth embodiment)

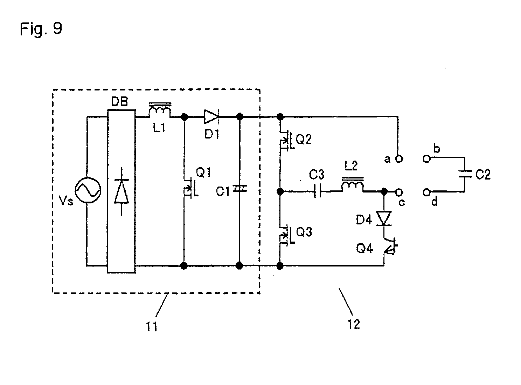

Fig. 9 is a circuit diagram according to a fourth embodiment of the present invention. The fourth embodiment is yet another specific example of a circuit realizing the operation in the first embodiment. A lighting device shown in Fig. 9 includes a DC power source part 11 and an inverter part 12. The DC power source part 11 is configured similarly to that shown in Fig. 5 and supplies a DC voltage to the inverter part 12. The inverter part 12 includes a serial circuit of switching elements Q2 and Q3, a DC-cutting capacitor C3 connected to a connection point between the switching elements Q2 and Q3, and the inductor L2 for resonance and current-limiting. The inverter part 12 uses a plus (+) terminal a of the DC power source part 11 and a terminal c of the inductor L2 as lamp output terminals, and the resonance capacitor C2 is connected to between lamp non-power source-side output terminals b and d. If a load is a fluorescent lamp 7 (see Fig. 1), filaments f1 and f2 are connected to between the terminals a and b and the terminals c and d, respectively. A configuration of the inverter part 12 stated above is similar to that of an ordinary capacitor preheating half-bridge inverter.

In the present embodiment, a serial circuit of a diode D4 and a switching element Q4 is further provided between the terminal c of the inductor L2 and a minus (-) terminal of the DC power source part 11. By turning on the a switching element Q4, the lamp output terminals (a→c) are connected to both ends of the capacitor C1 and a DC voltage is output. Although current detection means is not shown, it suffices to insert a current detection resistor somewhere in a route of flow of lamp current. For example, the current detection resistor may detect voltage between a collector and an emitter of a bipolar transistor that is the switching element Q4 by turning on the bipolar transistor in an unsaturated zone.

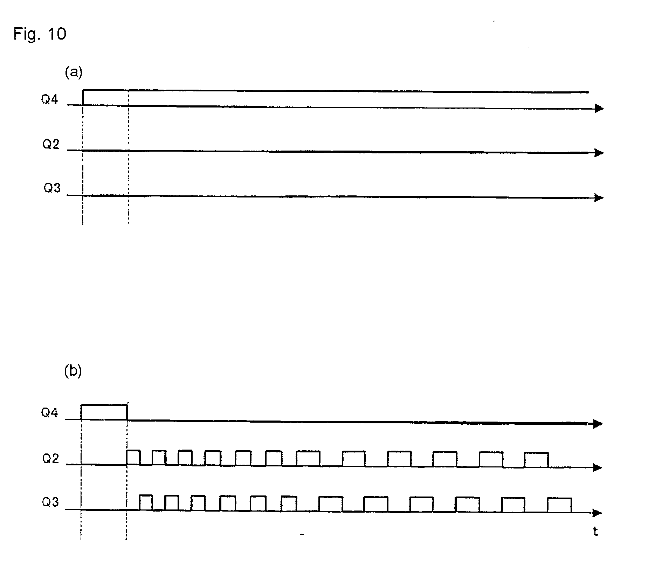

Fig. 10 shows operation waveforms according to the present embodiment. Fig. 9 (a) shows control signal waveforms of the switching elements Q2, Q3, and Q4 if a fluorescent LED lamp 8 is connected. Fig. 9 (b) shows control signal waveforms of the switching elements Q2, Q3, and Q4 if the fluorescent lamp 7 is connected.

Referring to Fig. 10(a), an operation if the fluorescent LED lamp 8 is connected will first be described. In a predetermined period (detection period) after the lighting device is lighted on, only the switching element Q4 is turned on, and the switching elements Q2 and Q3 are turned off. The DC voltage generated in the capacitor C1 is thereby output to the lamp terminals (a → c). Since a current is applied to the lamp output terminals by this DC voltage, it is possible to detect that the fluorescent LED lamp 8 is connected. In this case, a set-up chopper of the DC power source part 11 preferably outputs a voltage lower than a voltage at which the fluorescent lamp 7 operates for a following reason. Since an ordinary voltage output from the set-up chopper is (an effective value) about twice as high as a commercial AC voltage, the output voltage is often excessively high for the fluorescent LED lamp 7. Alternatively, the set-up chopper may be stopped for only operations in the predetermined period (detection period) after the lighting device is lighted on and in an instance subsequent to the detection period, in which the connected lamp is detected as the fluorescent LED lamp 8.

Referring to Fig. 10(b), an operation if the fluorescent lamp 7 is connected will be described. ON and OFF states of the switching elements Q2 to Q4 in the predetermined period (detection period) after the lighting device is turned on are similar to those shown in Fig. 10(a). However, if the fluorescent lamp 7 is connected, then the fluorescent lamp 7 is not lighted by the DC voltage from the capacitor C1, and a current is not eventually applied to between lamp output terminals (a → c). After end of the detection period, the switching element Q4 is turned off to separate the lamp output terminal c from the capacitor C1, a high-frequency voltage is outputted to the lamp output terminals a and c by a half-bridge inverter operation for alternately turning on and off the switching elements Q2 and Q3, and operations are performed in preheating, starting, and lighting periods, respectively.

Specifically, in the preheating period, the switching elements Q2 and Q3 are alternately turned on and off with a frequency sufficiently higher than no-load resonance frequency of the inductor L2 and the capacitor C2, thereby outputting a high-frequency voltage lower than a starting voltage for starting the fluorescent lamp 7 to between the lamp output terminals a and c. As a result, a preheat current is applied to the fluorescent lamp 7 via a pair of filaments f1 and f2 (see Fig. 1) and the capacitor C2 to turn the fluorescent lamp 7 into a state in which thermoelectrons can be emitted. Next, in the starting period, the switching elements Q2 and Q3 are alternately turned on and off with a frequency close to the no-load resonance frequency of the inductor L2 and the capacitor C2, thereby outputting a high-frequency voltage higher than the starting voltage for starting the fluorescent lamp 7 to between the lamp output terminals a and c. As a result, the fluorescent lamp 7 is started. Thereafter, in the lighting period, the switching elements Q2 and Q3 are alternately turned on and off with an appropriate frequency (phase delay mode) higher than a lighting resonance frequency of the inductor L2 and the capacitor C2 according to a load impedance of the fluorescent lamp 7, thereby outputting a high-frequency voltage corresponding to the rated voltage for the fluorescent lamp 7 to between the lamp output terminals a and c. As a result, it is possible to normally light the fluorescent lamp 7 in a rated state. The operations in the preheating, starting, and lighting periods apply for the other embodiments.

### (Fifth embodiment)

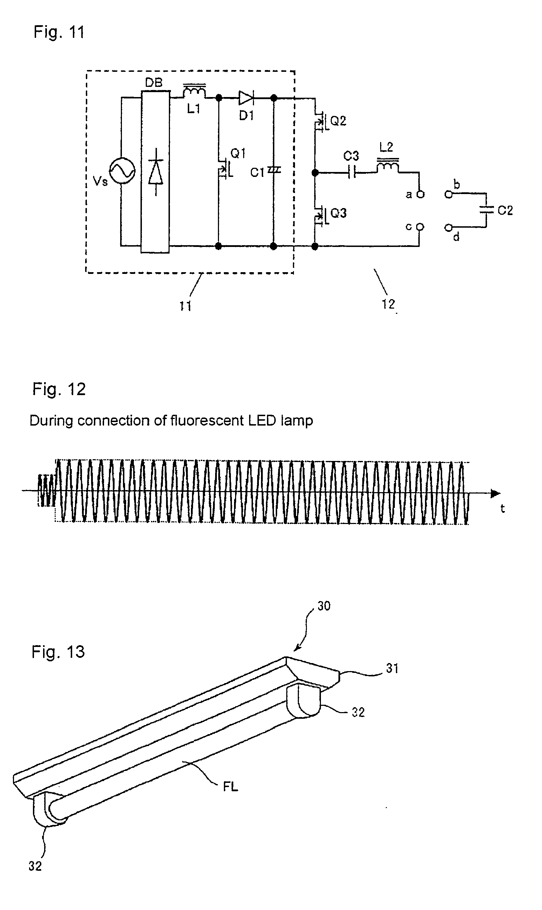

Fig. 11 is a circuit diagram according to a fifth embodiment of the present invention. In the fifth embodiment, a lighting device is constituted as an ordinary half-bridge inverter, and configured not to apply a DC voltage to between lamp output terminals a and c in a predetermined period (detection period) after the lighting device is lighted on but to set an output voltage in an inverter operation to a low voltage (for example, high-frequency voltage lower than a voltage in a preheating period).

Fig. 12 shows operation waveforms according to the present embodiment. Fig. 12 shows a waveform of a voltage applied to between the lamp output terminals a and c if the fluorescent LED lamp 8 is connected.

With the configuration according to the present embodiment, even if the fluorescent lamp 7 (see Fig. 1) is connected, a current flows in a route of the terminal a → the filament f1 → the terminal b → the resonance capacitor C2 → the terminal c → the filament f2 → the terminal d. However, the current flowing in this route is low since an output voltage in a detection period is lower than that in a preheated state.

If the fluorescent LED lamp 8 is connected, a current flows directly from the lamp output terminals (a → c) to the fluorescent LED lamp 8. Therefore, compared with the fluorescent lamp 7, the current is high. Depending on a difference in a magnitude of this current value, it is possible to discriminate whether the lamp is the fluorescent lamp 7 or the fluorescent LED lamp 8.

In the case where it is determined that the fluorescent LED lamp 8 is connected, a switching frequency of the inverter part 12 is changed so as to output an AC voltage suited for the fluorescent LED lamp 8. On the other hand, if it is determined that the fluorescent lamp 7 is connected, the lighting device performs an ordinary inverter operation of preheating, starting, and lighting.

### (Sixth embodiment)

Fig. 13 exemplarily shows an external view of an illumination fixture mounting the discharge lamp lighting device according to one of the first to fifth embodiments. A lighting fixture 30 includes a fixture main body 31 incorporating therein the lighting device according to any one of the first to fifth embodiments, and a pair of sockets 32 for electrically connecting the lighting device to a lamp FL. Electrodes of the lamp FL are detachably attached to the sockets 32, respectively. As the lamp FL, either the fluorescent lamp 7 (see Figs. 1 to 7) or the fluorescent LED lamp 8 (see Figs. 2 and 3) can be used. While Fig. 13 exemplarily shows a straight tube fluorescent lamp as the fluorescent lamp, the present invention may be applied to a lighting device for a round fluorescent lamp.

### [Brief Description of the Drawings]

[Fig. 1] Fig. 1 is a block circuit diagram showing a configuration of a first embodiment of the present invention.
[Fig. 2] Fig. 2 is a perspective view showing a schematic configuration of a fluorescent LED lamp employed in the present invention.
[Fig. 3] Fig. 3 is a circuit diagram showing an internal configuration of the fluorescent LED lamp employed in the present invention.
[Fig. 4] Fig. 4 is a waveform view for describing an operation in the first embodiment of the present invention.
[Fig. 5] Fig. 5 is a circuit diagram showing a configuration of a second embodiment of the present invention.
[Fig. 6] Fig. 6 is a waveform view for describing an operation in the second embodiment of the present invention.
[Fig. 7] Fig. 7 is a circuit diagram showing a configuration of a third embodiment of the present invention.
[Fig. 8] Fig. 8 is a waveform view for describing an operation in the third embodiment of the present invention.
[Fig. 9] Fig. 9 is a circuit diagram showing a configuration of a fourth embodiment of the present invention.
[Fig. 10] Fig. 10 is a waveform view for describing operation in the fourth embodiment of the present invention.
[Fig. 11] Fig. 11 is a circuit diagram showing a configuration of a fifth embodiment of the present invention.
[Fig. 12] Fig. 12 is a waveform view for describing an operation in the fifth embodiment of the present invention.
[Fig. 13] Fig. 13 is a perspective view showing an external view of a illumination fixture according to a sixth embodiment of the present invention.

### [Description of Reference Numerals]

- 1: Lighting device
- 2: High-frequency power source part
- 3: Direct-current power source part
- 4: Load determination part
- 5: Switching means
- 6: Current detection means

Fig. 1
   1 Lighting device
   2 Load determination part
Fig. 4
   1 Detection of FL tube
   2 Detection of LED
Fig. 5
   3 DC power source part
   4 Inverter part
Fig. 6
   1 Control waveform during connection of fluorescent LED lamp
   2 Detection period
   3 Control waveform during connection of fluorescent lamp
   4 Preheating
   5 Starting
   6 Lighting
Fig. 7
   1 DC power source part
   2 Inverter part
Fig. 12
   1 During connection of fluorescent LED lamp

## Claims

1. A lighting device for lighting a fluorescent lamp with a high frequency, comprising a function of detecting that a fluorescent LED lamp is attached to the lighting device,
wherein a voltage suited for the fluorescent LED lamp is outputted upon detecting that the fluorescent LED lamp is attached to the lighting device.

2. The lighting device according to claim 1, comprising a function of detecting that the fluorescent LED lamp is attached to the lighting device by applying an output voltage lower than a rated voltage of the fluorescent lamp to between lamp output terminals in a predetermined period after the lighting device is lighted on,
wherein the lighting device performs operations of preheating, starting, and lighting suited for the fluorescent lamp upon not detecting that the fluorescent LED lamp is attached to the lighting device in the predetermined period.

3. The lighting device according to claim 2,
wherein the output voltage applied to between the lamp output terminals in the predetermined period after the lighting device is lighted on is a direct-current voltage, and
the function detects that the fluorescent LED lamp is attached to the lighting device by detecting that a current is applied to between the lamp output terminals as a result of application of the direct-current voltage.

4. The lighting device according to claim 2,
wherein the output voltage applied to between the lamp output terminals in the predetermined period after the lighting device is lighted on is a high-frequency voltage, and
the function detects that the fluorescent LED lamp is attached to the lighting device by detecting that a current equal to or higher than a predetermined current is applied to between the lamp output terminals as a result of application of the high-frequency voltage.

5. An illumination fixture comprising the lighting device according to any one of claims 1 to 4.
